# EUROPEAN PATENT APPLICATION

(11) **EP 1 700 887 A1**
(43) Date of publication of application: **13.09.2006**
(21) Application number: 06300222.4
(22) Date of filing: 10.03.2006
(51) Int. Cl.: C08L 95/00, E02D 31/00

(54) **A bituminous binder and its manufacturing process, and a process for improving fuel resistance of such bituminous binder**

(30) Priority: 11.03.2005 IE 050131
(71) Applicant: COLAS, 92100 Boulogne-Billancourt (FR)
(72) Inventor: Thornton, John, GALWAY CITY - COUNTY GALWAY (IE)
(74) Representative: Catherine, Alain

(57) **Abstract**

The present invention relates to a fuel resistant bituminous binder, a process for making such a bituminous binder and its use in the manufacture of asphalt mixes and geomembranes. It relates also to a process for improving fuel resistance of such bituminous binders, asphalt mixes, geomembranes and jointing compounds, wherein said bituminous binder comprises by weight, based on the total weight of the binder, at least 50% of bitumen, and at least 3%, preferably at least 5% more preferably at least 10% and even better at least 15% of at least one ethylene/methyl acrylate copolymer.

## Description

The present invention relates to a fuel resistant bituminous binder, a process for making such a bituminous binder, and its use in the manufacture of asphalt mixes, geomembranes and jointing compounds.

The invention also relates to a process for improving fuel resistance of such bituminous binders, asphalt mixes, geomembranes and jointing compounds.

Bituminous binders are often blended with additives in order to improve their resistance to chemical compounds or their fuel resistance.

For example, British Patent n° 1,173,496 discloses a thermoplastic composition for corrosion protection and for the manufacture of elastic corrosion-protective wrappings for pipelines. This thermoplastic composition contains by weight, up to 40% of a bitumen, up to 30% of an ethylene/acrylic ester copolymer, from 30% to 95% of a polyisobutylene, and from 0.1% to 5% of an oily butadiene polymer or high weight aliphatic polysulfide. One of the ethylene/acrylic ester copolymer described is an ethylene/methyl acrylate copolymer.

British Patent n° 2,293,174 also describes a thermoplastic composition for hot coating of aggregates for road construction comprising from 80% to 99% by weight of bitumen and from 1% to 20% by weight of a modifying polymer containing grafted moieties, this polymer being eventually an ethylene/methyl acrylate copolymer.

Such modified bitumens can also be used in the manufacture of geomembranes for road construction and civil engineering.

However, these geomembranes, which are produced by impregnating a fabric with a molten bitumen, have generally a poor resistance to fuels.

In order to increase this fuel resistance, it has been proposed to mix the impregnating bitumen-based binder with a thermosetting polymer resin.

Thus, European Patent n° 0 725 187 discloses a bituminous geomembrane impregnated with a bitumen-based binder which is associated with a thermosetting polyurethane ranging from 10% to 40% by weight of the bituminous binder.

However, due to the short fuel resistance of this bituminous binder, the tightness of such a geomembrane decreases rapidly and fails by allowing fuel to penetrate and flow through the membrane in less than three days.

Therefore, an object of the present invention is to provide a bituminous binder, which remedies to the drawbacks of the prior art bituminous binders.

Another object of the present invention is to provide a bituminous binder easy to manufacture and having high fuel resistance.

A further object of the invention is also to provide a process for making a bituminous binder as above, without increasing costs thereof.

One object of the present invention relates in particular to the use of such a bituminous binder for the manufacture of asphalt mixes, geomembranes and jointing compounds.

It has been found that the addition of relatively high amount (at least 3% by weight) of at least one thermoplastic copolymer of a specific family of copolymers in a bituminous binder results in a bituminous binder which exhibits high fuel resistance.

According to a first aspect of the invention, there is provided a fuel resistant bituminous binder which comprises, by weight, based on the total weight of the binder, at least 50% of bitumen, and at least 3 %, preferably at least 5%, more preferably at least 10 %, and even better at least 15% of at least one ethylene/methyl acrylate copolymer.

Preferably, the fuel resistant bituminous binder of the invention comprises 3 to 30%, more preferably 5 to 30%, still more preferably 10 to 30% and even better 15 to 30% by weight, based on the total weight of the binder, of at least one ethylene/methyl acrylate copolymer. In the most preferred embodiments of the binder, the maximum amount of ethylene/methyl acrylate copolymer(s) will range up to 27% by weight.

Preferred ethylene/methyl acrylate copolymers comprise from 10 to 30%, preferably from 15 to 30% by weight, based on the total weight of the copolymer, of methyl acrylate units.

Also, the bituminous binder of the invention is preferably free of any other polymer than the ethylene/methyl acrylate copolymers.

In preferred embodiments, the bituminous binder of the invention consists solely of one or more bitumens and one or more ethylene/methyl acrylate copolymers.

According to ISO 1133 standard, the melt flow index of the ethylene/methyl acrylate as measured at 190°C is lower or equal to 1.5 g/10 min, preferably lower or equal to 1 g/10 min.

The bitumen according to the invention is typically a blend of natural hydrocarbon matters resulting from the heavy end obtained from petroleum distillation, or resulting from natural petroleum fields. It can be in solid state or liquid state and has a density generally ranging from 0.8 to 1.2.

These bitumens may also result from bitumen oxidation or from bitumen blending with modifying additives in order to improve adhesiveness characteristics, cationic emulsion implementation, or even from bitumens blending with elastomeric polymers commonly used in road construction or civil engineering.

The bitumen used for the binder can be any bitumen or blends of bitumens obtained from paraffinic or naphtenic crude oils or mixtures thereof, which could be processed according to anyone of well known treatment such as direct distillation, blowing process, semi-blowing process and desasphalting process. Preferred bitumens are those obtained through a desasphalting process, either by propane or butane, in particular by propane, and blends of these desasphalted bitumens or with other bitumen.

Generally, bitumens have a penetration grade according to EN 12591 "Bitumen and bituminous binders - Specifications for paving grade bitumens" of December 1999, ranging from 20 to 100, preferably from 40 to 60.

The binder preferably comprises from 50%, preferably at least 70%, to 97% by weight of bitumen(s), based on the total weight of the binder.

The invention relates also to a method for making a bituminous binder, according to the following steps, wherein percentages are by weight, based on the total weight of the binder:
a) heating at least 50 % of at least one bitumen at a temperature ranging from 160°C to 220°C, preferably from 170°C to 190°C,
b) adding and mixing at least 3 %, preferably at least 5%, more preferably at least 10% and even better at least 15% of at least one ethylene/methyl acrylate copolymer to the heated bitumen(s) obtained in a).

When added to the bitumen(s) at a temperature from 160 to 220 °C, the copolymer or mixture of copolymers softens and melts. The copolymer(s) is(are) easily dispersed into the mass of bitumen(s) after vigorous agitation of the mixture.

The copolymers used in the invention allow addition of high levels of copolymers without the formation of gels or giving high viscosity increases.

A long term hot storage may require agitation before use due to "creaming" occurring over time.

According to a further embodiment of the invention, there is provided a fuel resistant bituminous mix comprising:
- from 4 parts by weight to 15 parts by weight preferably from 4 to 8 parts by weight of a bituminous binder as described above,
- 100 parts by weight of a mineral aggregate, and
- from 0 to 2 parts by weight, preferably from 0.2 to 2 parts by weight and even better from 0.4 to 0.8 parts by weight of at least one polyolefin, preferably a polyethylene.

Generally the mineral aggregate has a grain size ranging up to 20mm, preferably up to 14mm. In particular the grain size of the aggregate will range from 1µm to 20mm, preferably from 1µm to 14mm.

Among the mineral aggregates there may be cited crushed rocks, limestone, such as limestone powder, fly ashes, slate powder, other mineral powders and blends thereof.

The invention concerns also a method for making a fuel resistant bituminous mix as described above, which comprises :
a) heating 100 parts by weight of a mineral aggregate at a temperature of 160 to 220°C, preferably of 170 to 190°C ;
b) mixing to the heated mineral aggregate of a) 4 to 15 parts by weight, preferably 4 to 8 parts by weight of a bituminous binder as described above and heated at a temperature ranging from 160 to 220°C, preferably from 170 to 190°C;
c) mixing to the product resulting from b) 0 to 2 parts by weight, preferably from 0.2 to 2 parts by weight and even better from 0.4 to 0.8 parts by weight of at least one polyolefin, preferably a polyethylene.

In the bituminous mix, the mineral aggregate has a maximum grain size ranging up to 20 mm, preferably up to 14 mm, and generally the aggregate has a grain size ranging from 1 µm to 20 mm and preferably from 1 µm to 14 mm.

Another embodiment of the invention is to provide a bituminous geomembrane comprising one or a stack of several fabrics and, optionally, a glass fleece, impregnated and covered with a binding medium comprising at least one bituminous binder as described above in which an aggregate of mineral particles having a maximum grain size ranging up to 150 µm is mixed.

A polyester film can further be applied on at least one of the surfaces covered with the binding medium.

In the present invention, covering with a binding medium means that at least one surface of the geomembrane, preferably the surface of the geomembrane intended to be in contact with solvents, in particular fuels, is covered with a continuous layer of the binding medium, preferably of a thickness of at least 0.5mm.

The preferred bituminous binder for the binding medium of such a geomembrane typically comprises by weight, based on the total weight of the binder:
- from 10% to 30%, preferably 15% to 30% of at least one ethylene/methyl acrylate copolymer, and
- from 90% to 70%, preferably 85% to 70% of a bitumen.

Preferred amount of aggregate in the binding medium ranges from 15% to 35% and more preferably from 20% to 30%, based on the total weight of the binding medium.

The fabric can be any conventional fabric used to manufacture geomembranes and is preferably made of fibres selected from polymeric fibres, glass fibres or mixtures thereof.

More preferably, the fabric according to the invention is made of polymeric fibres selected from polyester, polyethylene, polypropylene, polyamide, or mixtures thereof, preferably of polyester.

Generally, the fabric weight per unit surface area ranges from 100 to 600 gm/ m², preferably from 200 to 400 gm/ m².

Suitable fabrics to the invention can be woven or non woven and are optionally needled.

Preferred fabrics are non woven and also needled, in particular obtained by needling short fibres composed of polyester.

Also preferably, the geomembrane of the invention comprises a glass fleece on one side of the fabric or stack of fabrics which is also impregnated and covered with the binding medium. In a further preferred embodiment the geomembrane additionally comprises a polyester film applied on a binding medium covered surface.

Glass fleeces usually have a weight per unit surface area of 50 to 100 gm/m².

An example of appropriate polyester film is a Terphane® film commercialized by TORAY PLASTICS™.

Usually, the fabric is impregnated with the bituminous binder after the strengthening film has been placed on the fabric surface.

The invention also concerns a method of making the bituminous geomembrane described above according to the following steps wherein percentages are by weight based on the total weight on the binder:
a) heating a binding medium as above at a temperature ranging from 160 to 220°C, preferably from 170°C to 190°C, and
b) impregnating and covering a fabric or a stack of fabrics, optionally having one surface covered with a glass fleece, with the heated binding medium resulting from step a).

Usually, the amount of impregnation binding medium ranges from 2 to 3 kg of binder per square metre of fabric. The thickness of the impregnated membrane ranges from 2 to 6 mm.

As is classical, the geomembrane can be produced by any well known process.

The bituminous binder according to the invention can also be used for making cold applied materials, such as cold asphalt mixes. The bituminous binder of the present invention can also be in the form of an aqueous emulsion. In that case, the binder according to the invention does not contain any filler.

Binders of the invention in the form of an emulsion are particularly suitable for the manufacture of cold asphalt mixes.

Bituminous binders of the invention are particularly suitable for the manufacture of asphalt concrete or jointing compound along airfield concrete slabs.

According to another aspect of the invention, there is provided a process for improving fuel resistance of a bituminous binder comprising at least 50% by weight of at least one bitumen, said process comprising the addition to the binder of at least 3 %, preferably at least 5%, more preferably at least 10% and even better at least 15% by weight, based on the total weight of the binder, of at least one ethylene/methyl acrylate copolymer as previously defined.

The presence of high polymer contents (at least 3% by weight) gives greater fuel resistance to such bituminous binders and due to the thermoplastic nature of the copolymers, the modified bituminous binders according to the invention are also easier to manufacture than bituminous binders containing thermosetting resins.

The following examples and tests illustrate the invention :

### EXAMPLE 1: FUEL RESISTANCE TESTS OF BINDING MEDIA.

Tests have been performed in order to evaluate the effects of various modifying polymers on the fuel resistance of binding media.

Three modifying polymers were tested: a reactive ethylene terpolymer Elvaloy AM® marketed by DuPont™, a styrene-butadienestyrene copolymer (SBS), and an ethylene/methyl acrylate copolymer Elvaloy AC® 1125 marketed by DuPont™ comprising, by weight of copolymer, 25% of methyl acrylate.

Each binding medium has been manufactured according to the following method:

(Unless otherwise mentioned, percentages in this example are by weight based on the total weight of the binding medium).

### 1. PREPARATION OF THE BINDING MEDIUM

A specific amount of a modifying polymer is mixed with a mass of bitumen heated at a temperature ranging from 170°C to 190°C. Each mixture is vigorously agitated until the modifying polymer is totally dispersed into the mass of bitumen, to obtain a bituminous binder.

Limestone aggregates passing a 0.09 mm test sieve heated to 170-190°C are placed into a number of blending vessels.

Then, the bituminous binder at the temperature of 170-190°C is poured in the blending vessels and mixed with the aggregate.

Each binding medium obtained is heated while homogenized at a temperature ranging from 170°C to 190°C for 1 hour.

Before adding the aggregate to the hot bituminous binder, a catalyst can be added. In that case, the temperature of the bituminous binder is reduced to 185°C, and phosphoric acid is added to the modified bitumen which is homogenized and maintained at 185°C.

Ratios of compounds comprised in each sample are shown in Table 1.

**Table 1**

| BINDING MEDIUM | GRADE AND TOTAL % OF BITUMEN | | COPOLYMER | SPA (%) | AGGREGATE |
|---|---|---|---|---|---|
| C1 | 100/40 | 75% | None | None | 25% |
| C2 | 100 pen | 64% | 11% SBS | None | 25% |
| C3 | 100/40 | 72.3% | 2.5% Elvaloy AM | 0.2% | 25% |
| C4 | 100/40 | 73.3% | 1.7% Elvaloy AM | 0.2% | 25% |
| C5 | 50 pen | 70.8% | 4% Elvaloy AM | 0.2% | 25% |
| C6 | 50 pen+100/40 pen - 1:1 ratio | 71% | 4% Elvaloy AM | None | 25% |
| C7 | 50 pen+100 pen-1:1 ratio | 60% | 4%AM+11%SBS | None | 25% |
| C8 | 50 pen+100 pen - 1:1 ratio | 59.8% | 4% Elvaloy AM + 11% SBS | 0.2% | 25% |
| C9 | 50 pen+100 pen - 2:1 ratio | 61.8% | 2% Elvaloy AM + 11% SBS | 0.2% | 25% |
| C10 | 50 pen+100 pen-2:1 ratio | 60.8% | 3% Elvaloy AM + 11% SBS | 0.2% | 25% |
| C11 | 50 pen+100 pen-2:1 ratio | 59.8% | 4% Elvaloy AM + 11% SBS | 0.2% | 25% |
| C12 | 50 pen | 69.3% | 4% Elvaloy AC+1.5% Elvaloy AM | 0.2% | 25% |
| 1 | 50 pen | 55% | 20% Elvaloy AC | None | 25% |
| 2 | 50 pen propane | 55% | 20% Elvaloy AC | None | 25% |
| 3 | 50 pen propane | 60% | 15% Elvaloy AC | None | 25% |
| 4 | 50 pen propane | 58% | 17% Elvaloy AC | None | 25% |

| | | | | | |
|---|---|---|---|---|---|
| SPA: Super Phosphoric Acid (catalyst) | | | | | |
| 100/40: 100/40 grade oxidized bitumen | | | | | |
| 100 pen: 100 pen grade naphtenic bitumen | | | | | |
| 50 pen: 50 pen grade naphtenic bitumen | | | | | |
| 50 pen propane: 50 pen grade propane bitumen | | | | | |
| Elvaloy AC: Elvaloy AC 1125® | | | | | |

### 2. MANUFACTURE OF THE GEOMEMBRANE

Each binding medium obtained is poured in a bath and heated in order to be maintained in a molten form.

15×15 cm square samples of non woven needle punched NTP3 grade (300gm/m²) polyester membrane marketed by COLAS™ are each impregnated with one test binding medium obtained above by immersing in a bath of molten binding medium. The air is removed from the submerged fabric by agitation with a glass rod.

Test specimens are then dried and cooled in ambient air. They exhibit a thickness varying from 5.0 to 5.7 mm with a layer of binding medium of at least 0.5 mm thickness on the upper test surface.

A polyester film, TERPHANE® film marketed by TORAY PLASTICS™ may be applied upon each test specimen while they are still hot. However, all fuel resistance tests hereafter were carried out with the TERPHANE film removed.

### 3. TEST CONDITIONS

Each test specimen is restrained between two flanges to present a circular section of 20 cm². 50 cm³ of unleaded 95 octane petrol are poured over the circular section of the test specimen.

The petrol test container is sealed to stop evaporation.

### 4. TEST RESULTS

Any liquid dropping from the test specimen is observed and collected in a beaker.

The time at which liquid drops from the test specimen is noted. Results are given in Table 2.

**Table 2**

| TEST | BINDING MEDIUM | FUEL RESISTANCE TIME PERIOD |
|---|---|---|
| 1 | C1 | <24 hours |
| 2 | C2 | <24 hours |
| 3 | C3 | Gelled |
| 4 | C4 | Too viscous |
| 5 | C5 | 1 days |
| 6 | C6 | 1 day |
| 7 | C7 | 1 day |
| 8 | C8 | Gelled |
| 9 | C9 | 1 day |
| 10 | C10 | 1 days |
| 11 | C11 | 2 days |
| 12 | C12 | 2 days |
| 13 | 1 | >3 days* |
| 14 | 2 | > 6 days |
| 15 | 3 | >4<6 days |
| 16 | 4 | > 6 days |

| | | |
|---|---|---|
| *: This amount of polymer is difficult to get entirely dissolved into the 50 pen bitumen. | | |

These results show that Ethylene Reactive Terpolymer such as Elvaloy AM is not suitable for improving fuel resistance of binding media, because of its effect on viscosity at relatively low level.

Moreover, the ethylene/methyl acrylate copolymer used in the invention does not increase the viscosity to the extent expected with the Elvaloy AM.

Results of Table 2 show that examples 1 to 12, in which binding media outside the scope of the present invention have been used have fuel resistance time periods that do not exceed 2 days.

On the contrary, examples 13 to 16 using binders of the invention have fuel resistance time period of at least 3 days.
The high content of ethylene/methyl acrylate copolymer in the bituminous binder of the invention leads to a polymeric matrix which confers high fuel resistance to the binder.

### EXAMPLE 2 - DURIEZ TEST AND MARSHALL TEST

Two comparative tests were made on some bituminous mix specimens according to the invention, and on some conventional bituminous mixes, in order to appreciate their susceptibility to the kerosene.

The two comparative tests were DURIEZ TEST, with immersion of samples in kerosene and a loss of weight-evaluating test by using MARSHALL SAMPLES.

### 1. PREPARATION OF THE BINDER

### 1.1. Operating mode

2 specimens of a bituminous binder according to the invention are prepared by adding an ethylene/methyl acrylate copolymer resin, such as the Elvaloy® AC 1125 copolymer marketed by Dupont® , to a bitumen having a penetrability grade of 50/70.

The mixture is blended for 1 hour at a temperature ranging from 185°C to 205°C, preferably at 195°C.

Besides, a specimen of a bituminous-based binder is prepared by adding 2% by weight, based on the total weight of the binder, of Elvaloy® AM marketed by DUPONT to a 50/70 penetrability grade bitumen.

The mixture is blended for 1 hour at a temperature ranging from 170 to 190°C, preferably at 180°C.

Ratios of copolymers in the bitumen of each sample are shown in table 3.

**TABLE 3**

| Sample | 50/70 PG bitumen | Elvaloy AC 1125 | Elvaloy AM |
|---|---|---|---|
| F# 1 | 95% | 5% | - |
| F# 2 | 90 % | 10% | - |
| F# 3 | 98% | - | 2% |

| | | | |
|---|---|---|---|
| PG : Penetration Grade | | | |
| F#: Formula | | | |

### 1.2. Features of modified bitumens

Bitumen-based binders obtained are submitted to several tests in order to determine their main features.

The penetration grade is determined at 25°C according to EN 1426 "Bitumen and bituminous binders - Determination of needle penetration" of December 1999.

The softening temperature is measured according to EN 1427 "Bitumen and bituminous binders - Determination of softening points - Ring and ball method" of January 2000.

**TABLE 4**

| Denomination and reference | Bitumen 50/70 PG | F# 1 : Modified bitumen with 5% Elvaloy AC 1125 | F# 2 : Modified bitumen with 10% Elvaloy AC 1125 | F#3 : Modified bitumen with 2% Elvaloy AM |
|---|---|---|---|---|
| Composition | | | | |
| Bitumen | | 95 | 90 | 98 |
| Elvaloy AC®1125 | | 5 | 10 | - |
| Elvaloy AM® | | - | - | 2 |
| Penetration at 25°C according to EN 1426 (1/10 mm) | 55 | 33 | 30 | 39 |
| Softening temperature °C according to EN 1427 | 49,4 | 73,0 | 80,8 | 58,2 |
| Liquid | water | water | glycerol | water |
| Pfeiffer index | -1,1 | 2,3 | 3,2 | 0,1 |

| Microphotography | | | | |
|---|---|---|---|---|
| Principal morphology Secondary morphology | | stringy | stringy | solution |

### 2. PREPARATION OF BITUMINOUS MIXES

Bituminous mixes are prepared from modified bitumens obtained above or pure bitumen and from aggregates.

### 2.1. Preparation of aggregates

An aggregate mix is prepared by stirring together 4 size graded materials provided by La Noubleau quarry and a filler passing the 0.08 mm test sieve and marketed by MEAC®.

All percentages are by weight, based on the total weight of aggregates and shown in the table 5.

**TABLE 5**

| Component | % wt of aggregates |
|---|---|
| 6/10 La Noubleau aggregates | 23% |
| 4/6 La Noubleau aggregates | 23 % |
| 2/4 La Noubleau aggregates | 9 % |
| 0/2 La Noubleau aggregates | 44 % |
| Filler | 1% |

### 2.2. Preparation of bituminous mixes

Eight different formulas of bituminous mix are prepared:
Formulas #1 to #3 are prepared by mixing 7 parts by weight of bitumen-based binder heated at 180°C with 100 parts by weight of aggregates heated at 180°C and with 1 part by weight of polyethylene.
Formulas #4 to #6 are prepared by mixing 7 parts by weight of bitumen-based binder heated at 180°C with 100 parts by weight of aggregates heated at 180°C.
Formulas F#7 and F#8 are standard samples prepared by mixing 7 parts by weight of 50/70 PG bitumen heated at 180°C with 100 parts by weight of aggregates heated at 180°C and 1 part by weight of polyethylene (F#7) and without polyethylene (F#8)

For each formula, two sets of five specimens are prepared.

Bituminous mixes obtained are blended at a temperature ranging from 170°C to 190°C, preferably at 180°C for 240 seconds.

Each bituminous hot mix is poured into two moulds, and left for cooling and drying at room temperature.

### 3. SUSCEPTIBILITY OF SAMPLES TO KEROSENE

### 3.1. DURIEZ TEST with immersion into kerosene.

The resistance of the specimens according to the invention to kerosene is evaluated by carrying out a DURIEZ TEST according to NF P98-251-1 but with immersion of specimen of each formula in the kerosene JET A₁ during 7 days/at 18°C.

Bituminous mixes are taken out from moulds, and for one specimen set are stored at 18°C in air while the other set is immersed into kerosene Jet A₁ for 7 days/at 18°C.

Each specimen is weighted and its per unit volume is calculated.

Next, its resistance to compression is measured.

The results shown in Table 6, are the average values for the 5 specimens of each set.

**TABLE 6**

| | Binder | PE | R (MPa) | r (MPa) | r/R |
|---|---|---|---|---|---|
| F#1 | Bitumen 50/70 Elvaloy AC 5 % | 1% | 14.6 | 10.2 | 0.70 |
| F#2 | Bitumen 50/70 Elvaloy AC 10 % | 1% | 14.9 | 9.9 | 0.67 |
| F#3 (comparative) | Bitumen 50/70 Elvaloy AM 2 % | 1% | 14.7 | 9.6 | 0.65 |
| F#4 | Bitumen 50/70 Elvaloy AC 5 % | 0% | 12.6 | 7.7 | 0.62 |
| F#5 | Bitumen 50/70 Elvaloy AC 10 % | 0% | 11.7 | 8.3 | 0.71 |
| F#6 (comparative) | Bitumen 50/70 Elvaloy AM 2% | 0% | 12.0 | 7.1 | 0.59 |
| F#7 (comparative) | Bitumen 50/70 | 1% | 13.0 | 7.3 | 0.56 |
| F#8 (comparative) | Bitumen 50/70 | 0% | 9.6 | 4.6 | 0.48 |

| | | | | | |
|---|---|---|---|---|---|
| F#: Formula | | | | | |
| R: resistance to compression of specimens stored 7 days in air at 18°C. | | | | | |
| r: resistance to compression of specimens immersed 7 days in kerosene et 18°C. | | | | | |

These results show that a bituminous mix comprising a binder according to the invention exhibits a r/R ratio higher than pure bitumen and bituminous mixes comprising the Elvaloy AM copolymer.

### 3.2 Evaluation of the loss of weight by using MARSHALL SAMPLES

The loss of weight of the bituminous coating according to the invention is measured by using Marshall moulded samples.

4 specimens of each formula as described above are prepared:
Formulas #1 to #3 are prepared by mixing 7 parts by weight of bitumen-based binder heated at 180°C with 100 parts by weight of aggregates heated at 180°C and with 1 part by weight of polyethylene.
Formulas #4 to #6 are prepared by mixing 7 parts by weight of bitumen-based binder heated at 180°C with 100 parts by weight of aggregates heated at 180°C.
Formulas F#7 and F#8 are standard samples prepared by mixing 7 parts by weight of 50/70 PG bitumen heated at 180°C with 100 parts by weight of aggregates heated at 180°C and with 1 part by weight of polyethylene (F#7) and without polyethylene (F#8).

Mixtures obtained are blended at a temperature ranging from 170°C to 190°C, preferably at 180°C for 240 seconds.

Next, each bituminous hot mix is poured in a mould, and compacted with 2 x 75 blows, at a rate of 1.06 blow/second.

Next, specimens are weighted and then immersed in kerosene Jet A₁ for 24 hours at 18°C.

After drying in an oven at 60°C during 5 days, the specimens are weighted, and the loss of weight for each specimen is recorded

An average of the loss of weight is calculated for each formula, based on the measures of the 4 specimens of each formula.

The results are given in Table 7.

**TABLE 7**

| | Loss of weight (%) |
|---|---|
| F#1 | 0,45 |
| F#2 | 0,33 |
| F#3 (comparative) | 0,43 |
| F#4 | 0,52 |
| F#5 | 0,40 |
| F#6 (comparative) | 0,49 |
| F#7 (comparative) | 0,80 |
| F#8 (comparative) | 4,6 |

These results show that the loss of weight of bituminous mixes according to the invention is significantly reduced compared to conventional bituminous mixes.

## Claims

1. A fuel resistant bituminous binder **characterised in that** it comprises by weight, based on the total weight of the binder, at least 50 % of bitumen, and at least 3 %, preferably at least 5 %, more preferably at least 10% and even better at least 15% of at least one ethylene/methyl acrylate copolymer.

2. A fuel resistant bituminous binder according to claim 1, **characterised in that** it comprises 3 to 30%, preferably 5 to 30%, more preferably 10 to 30% and even better 15 to 30% by weight, based on the total weight of the binder, of at least one ethylene/methyl acrylate copolymer

3. A fuel resistant bituminous binder according to anyone of claims 1 or 2, **characterised in that** it comprises a maximum amount of ethylene/methyl acrylate copolymer(s) ranging up to 27% by weight.

4. A bituminous binder according to anyone of the previous claims, **characterised in that** ethylene/methyl acrylate copolymers comprise from 10 to 30%, preferably from 15% to 30% by weight, based on the total weight of the copolymer, of methyl acrylate units.

5. A bituminous binder according to anyone of the previous claims, **characterised in that** the binder is free of any other polymers than ethylene/methyl acrylate copolymer(s).

6. A bituminous binder according to anyone of the previous claims, **characterised in that** it only comprises one or more bitumens and one or more ethylene/methyl acrylate copolymers.

7. A bituminous binder according to anyone of the previous claims, **characterised in that** the melt flow index of the copolymer measured at 190°C according to ISO 1133 standard is equal or lower than 1.5 g/10min, preferably equal or lower than 1 g/10min.

8. A bituminous binder according to anyone of the previous claims, **characterised in that** the bitumen is obtained from paraffinic or naphtenic crude oils or mixtures thereof, by direct distillation, blowing, semi-blowing or desasphalting process, preferably by a propane or butane desasphalting process, and blends thereof.

9. A bituminous binder according to anyone of the previous claims, **characterised in that** the binder comprises from 50%, preferably at least 70%, to 97% by weight of bitumen(s), based on the total weight on the binder.

10. A fuel resistant bituminous mix **characterised in that** it comprises:
- from 4 to 15 parts by weight, preferably from 4 to 8 parts by weight of a bituminous binder according to anyone of claims 1 to 9,
- 100 parts by weight of mineral aggregates, and
- from 0 to 2 parts by weight, preferably from 0.2 to 2 parts by weight and even better from 0.4% to 0.8% of at least one polyolefine, preferably a polyethylene

11. A fuel resistant bituminous mix according to claim 10, **characterised in that** mineral aggregates are selected from crushed rocks, limestone, limestone powder, fly ash, slate powder, other mineral powders or blends thereof.

12. A fuel resistant bituminous mix according to claim 10 or 11, **characterised in that** the aggregates have a grain size ranging up to 20 mm, preferably up to 14 mm, more preferably ranging from 1 µm to 20 mm and even better from 1 µm to 14 mm.

13. A bituminous geomembrane **characterised in that** it comprises one or a stack of several fabrics and, optionally, a glass fleece, said fabric or stack of several fabrics and optional glass fleece being impregnated and covered with a binding medium comprising at least one bituminous binder according to anyone of claims 1 to 9 in which is mixed an aggregate of mineral particles having a grain size ranging up to 150 µm.

14. A bituminous geomembrane according to claim 13, **characterised in that** a polyester film is applied on at least one of the surfaces covered with the binding medium.

15. A bituminous geomembrane according to claim 13 or 14, **characterised in that** the binding medium comprises a bituminous binder comprising by weight, based on the total weight of the binder:
- from 10 to 30%, preferably from 15% to 30% of at least one ethylene/methyl acrylate, and
- from 90% to 70%, preferably 85% to 70% of a bitumen.

16. A bituminous geomembrane according to claim 13 to 15, **characterised in that** the binding medium comprises at least one aggregate selected from limestone powder, fly ash, slate powder, other mineral powders or blends thereof, preferably selected from limestone powder.

17. A bituminous geomembrane according to any of claims 13 to 16, **characterised in that** the binding medium comprises an amount of aggregates ranging from 15% to 35%, preferably from 20% to 30% by weight, based on the total weight of the binding medium.

18. A bituminous geomembrane according to anyone of claims 13 to 17, **characterised in that** the fabric(s) is (are) made of fibres selected from polymeric fibres, glass fibres, or mixture thereof.

19. A bituminous geomembrane according to claim 18, **characterised in that** the polymeric fibres are selected from polyester, polyethylene, polypropylene, polyamide, or mixtures thereof.

20. A bituminous geomembrane according to claim 19, **characterised in that** the fabric(s) is (are) made of polyester fibres.

21. A bituminous geomembrane according to any of claims 18 to 20 **characterised in that** at least one fabric is woven or non-woven.

22. A bituminous geomembrane according to anyone at claims 13 to 21, **characterized in that** a surface of the goemembrane, preferably a surface to be in contact with solvents, is covered with a continuous layer of the binding medium, preferably of a thickness of at least 0.5mm.

23. A method for making a bituminous binder according to anyone of claims 1 to 9 comprising the following steps, wherein percentages are by weight, based on the total weight of the binder:
a) heating at least 50% of at least one bitumen at a temperature ranging from 160°C to 220°C, preferably from 170°C to 190°C, and
b) adding and mixing at least 3 %, preferably at least 5%, more preferably at least 10% and even better at least 15% of at least one ethylene/methyl acrylate copolymer to the heated bitumen(s) obtained in a).

24. A method for making a fuel resistant bituminous mix according to anyone of claims 10 to 12 comprising the following steps :
a) heating 100 parts by weight of a mineral aggregate at a temperature ranging from 160°C to 220°C, preferably from 170°C to 190°C;
b) mixing to the heated mineral aggregate of a) 4 to 15 parts by weight, preferably 4 to 8 parts by weight of a bituminous binder according to any one of claims 1 to 9 at a temperature of 160°C to 220°C, preferably 170 to 190°C, and
c) mixing to the product resulting from b) 0 to 2 parts by weight, preferably from 0.2 to 2 parts by weight and even better from 0.4 to 0.8 parts by weight of at least one polyolefine, preferably a polyethylene.

25. A method of making a bituminous geomembrane according to anyone of claims 13 to 22 comprising the following steps wherein percentages are by weight, based on the total weight of the binder:
a) heating a binding medium according to anyone of claims 13 to 17 at a temperature ranging from 160 to 220°C, preferably from 170 to 190°C, and
b) impregnating and covering a fabric or a stack of fabrics, optionally having one surface covered with a glass fleece, with the heated binding medium resulting from step a).

26. A process for improving fuel resistance of a bituminous binder comprising at least 50% of at least one bitumen, **characterised in that** it comprises the addition to the binder of at least 3 %, preferably at least 5%, more preferably at least 10% and even better at least 15% by weight, based on the total weight of the binder, of at least one ethylene/methyl acrylate copolymer.

27. The process for improving fuel resistance of a bituminous binder according to claim 26, **characterized in that** the copolymer comprises from 10 to 30%, preferably from 15% to 30% by weight, based on the total weight of the copolymer, of methyl acrylate units.
